# EUROPÄISCHE PATENTANMELDUNG

(11) **EP 2 251 244 A2**
(43) Veröffentlichungstag der Anmeldung: **17.11.2010**
(21) Anmeldenummer: 10157460.6
(22) Anmeldetag: 24.03.2010
(51) Int. Cl.: B62D 5/04, B62D 15/02

(54) **Verfahren zum Betrieb eines Lenksystems in einem Fahrzeug**

(30) Priorität: 15.05.2009 DE 102009003147
(71) Anmelder: ZF Lenksysteme GmbH, 73527 Schwäbisch Gmünd (DE)
(72) Erfinder: Gaedke, Alexander, 73525, Schwäbisch Gmünd (DE); Greul, Roland, 73547, Lorch (DE); Kreis, Christopher, 73728, Esslingen (DE); Werner, Thomas, 73492, Rainau (DE)

(57) **Zusammenfassung**

Bei einem Verfahren zum Betrieb eines Lenksystems in einem Fahrzeug, das mit einer elektrischen Lenkkraftunterstützungseinrichtung ausgestattet ist, wird der Lenkkraftunterstützungseinrichtung als Eingangsgröße eine Sollgröße zugeführt, die in einem Fahrerassistenzsystem ermittelt wird.

## Beschreibung

### Beschreibungsteil

Die Erfindung bezieht sich auf ein Verfahren zum Betrieb eines Lenksystems in einem Fahrzeug nach dem Oberbegriff des Anspruches 1 bzw, 2,

In der DE 102 21 678 A1 wird ein Lenksystem in einem Kraftfahrzeug beschrieben, das zur Lenkkraftunterstützung mit einem elektrischen Stellmotor ausgestattet ist, über den ein Unterstützungsmoment erzeugbar ist. Das Unterstützungsmoment wird üblicherweise in ein Lenkgetriebe eingespeist, über das die von einer Lenkwelle übertragene Lenkbewegung des Fahrers in ein Lenkgestänge zur Erzeugung eines Radlenkwinkels an den lenkbaren Rädern umgesetzt wird,

Der Erfindung liegt die Aufgabe zugrunde, in einem Lenksystem, welches zur Lenkkraftunterstützung mit einem elektrischen Servomotor ausgestattet ist, unter Beibehaltung der Lenkcharakteristik dem Fahrer zusätzliche Informationen über den aktuellen Fahrzustand zu übermitteln,

Diese Aufgabe wird erfindunssgemäß mit den Merkmalen des Anspruches 1 bzw, 2 gelöst, Die Unteransprüche geben zweckmäßige Weiterbildungen an.

Das erfindungsgemäße Verfahren setzt ein Lenksystem in einem Fahrzeug voraus, das mit einem elektrischen Servomotor (EPS - Electric Power Steering) als Lenkkraftunterstützungseinheit ausgestattet ist. Über den elektrischen Servomotor wird auf elektrische Weise ein Unterstützungsmoment erzeugt, welches in das Lenksystem eingespeist wird.

Erfindungsgemäß ist vorgesehen, dass dem elektrischen Servomotor als Eingangsgröße eine Sollgröße eines Fahrerassistenzsystems zugeführt wird, die der Ermittlung des vom elektrischen Servomotor generierten elektrischen Unterstützungsmoment zugrunde gelegt wird. Bei der Sollgröße handelt es sich um eine Winkel- oder Kraftgröße, die in dem elektrischen Servomotor bzw. einem dem elektrischen Servomotor zugeordneten Regel- bzw, Steuergerät in ein Unterstützungsmoment umgerechnet wird. Die Winkel- oder Kraftgröße wird aus der Abweichung zwischen der Soll- und der Ist-Position des Fahrzeugs bestimmt, was insbesondere in einem Positionsbestimmungssystem durchgeführt wird, beispielsweise in einem Spurführungssystem, in welchem die Soll- und die Ist-Position des Fahrzeugs bestimmt und Signale zur Beaufschlagung eines Aktuators im Fahrzeug erzeugt werden, um die Soll- und die Ist-Position zusammenzuführen,

Diese Vorgehensweise hat verschiedene Vorteile, Zum einen lassen sich bestehende Lenksysteme, die mit einer elektrischen Unterstützungseinrichtung ausgestattet sind, mit geringem Aufwand und ohne zusätzliche Hardware um weitere Funktionalitäten erweitern, über die dem Fahrer ausgehend von Sollgrößen eines Positionsbestimmungssystem zusätzliche Informationen über den aktuelle Fahrzeug- bzw. Umgebungszustand mitgeteilt werden. über die elektrische Unterstützungseinrichtung kann ein Eingriff in das Lenksystem vorgenommen werden, das sich in einem geänderten Unterstützungsmoment äußert, was vom Fahrer über das Lenkrad wahrgenommen werden kann. Dem Fahrer werden somit auf haptische Weise Informationen über den aktuellen Fahrzustand des Fahrzeugs mitgeteilt.

Des Weiteren erfolgt der Eingriff in das Lenksystem durch Modifikation der Eingangssignale der Funktionsblöcke zur Erzeugung des fahrzeugtypischen Lenkgefühls. Auf diese Weise kann die Lenkcharakteristik beibehalten werden, wodurch das subjektiv empfundene Lenkgefühl trotz der zusätzlichen Ansteuerung des elektrischen Servomotors aufgrund der zusätzlichen Information beibehalten oder zumindest weitgehend beibehalten wird.

Teil der Lenkkraftunterstützungseinrichtung ist zweckmäßigerweise ein sogenanntes aktives Rücklaufmodul, in welchem ein Anteil des vom Fahrer empfundenen Sollhandmoments abhängig von der Differenz der aktuellen Ist-Größe und der Eingangs-Sollgröße - die Winkel- oder Kraftgröße - ermittelt wird. Da diese Eingangs-Sollgröße in die Lenkkraftunterstützungseinrichtung einfließt, kann die grundsätzliche Struktur der Lenkkraftunterstützungseinrichtung beibehalten werden, so dass das vom Fahrer als natürlich bzw, gewohnt empfundene Lenkgefühl beibehalten wird. Die Umrechnung der Sollgröße innerhalb der elektrischen Servounterstützungseinrichtung, die neben dem Elektromotor auch ein zugeordnetes Regel- bzw, Steuergerät umfasst, ist ohne Änderung der Umrechnungsvorschrift in der Servounterstützungseinrichtung möglich.

Gemäß einer ersten bevorzugten Ausführung handelt es sich bei der Sollgröße, die als Eingangsgröße einem dem elektrischen Servomotor zugeordneten Modul, beispielsweise einem Rücklaufmodul zugeführt wird, um einen Zielrücklaufwinkel, der in einem Positionsbestimmungssystem, welches Teil eines Fahrerassistenzsystems sein kann, ermittelt wird. Gemäß einer weiteren vorteilhaften Ausführung ist vorgesehen, dass die Sollgröße eine Zusatz-Zahnstangenkraft ist, die zu einer in einer Zahnstange des Lenksystems wirkenden, gemessenen oder berechneten Zahnstangenkraft addiert wird.

Die Sollgröße wird insbesondere in einem als Spurführungsassistenzsystem ausgeführten Positionsbestimmungssystem ermittelt, welches entweder den Fahrer dabei unterstützt, das Fahrzeug auf einer Solltrajektorie zu halten, oder selbsttätig in den Fahrzustand eingreift, um das Fahrzeug entlang der Solltrajektorie zu führten. Bei dem Verfahren ist vorgesehen, dass das vom elektrischen Servomotor generierte Unterstützungsmoment, das als Reaktion auf die eingespeiste Sollgröße erzeugt wird, im Sinne einer Lenkempfehlung den Fahrer dazu veranlassen soll, die Solltrajektorie des Fahrzeugs wieder einzunehmen, Dies kann beispielsweise dadurch erreicht werden, dass Lenkbewegungen des Fahrers in Richtung der Solltrajektorie bzw. -bahn durch ein entsprechendes Zusatzmoment unterstützt und Fahrerlenkbewegungen entgegengesetzt zur Sollbahn erschwert werden.

Die Sollgröße, die dem elektrischen Servomotor als Eingangsgröße zugeführt wird, kann von verschiedenen Zustandsgrößen des Fahrzeugs abhängen, beispielsweise von dem relativen Gierwinkel des Fahrzeugs, der lateralen Abweichung zwischen der Sollbahn und der tatsächlichen Fahrzeugposition, der Fahrzeuggeschwindigkeit und/oder der Krümmung einer aktuell durchfahrenen Kurve. Allgemein können Zustandsgrößen auf Lage-, Geschwindigkeits- und Beschleunigungsebene in einer, zwei oder allen drei Raumrichtungen sowie Kräfte und Momente bei der Ermittlung der Sollgröße berücksichtigt werden,

Des Weiteren kann es zweckmäßig sein, die Sollgröße auf einen Grenzwert zu beschränken, wodurch auch der Anteil des Unterstützungsmomentes, der auf die Sollgröße zurückzuführen ist, beschränkt wird. Damit ist sichergestellt, dass dem auf die Sollgröße entfallenden Anteil des Unterstützungsmomentes, das als Zusatzmoment erzeugt wird, lediglich ein informativer Charakter zukommt, der vom Fahrer als Lenkinformation bzw, Lenkempfehlung verstanden wird,

Zusätzlich oder alternativ zum Spurführungsassistenzsystem können auch sonstige Fahrerassistenzsysteme zur Erzeugung einer Sollgröße herangezogen werden, beispielsweise ein elektronisches Stabilitätsprogramm (ESP) oder eine Antriebsschlupfregelung (ASR).

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Lenksystems in einem Fahrzeug, das mit einem überlagerungslenkgetriebe zur Erzeugung eines Überlagerungslenkwinkels und mit einer elektrischen Lenkkraftunterstützungseinrichtung zur Erzeugung eines Unterstützungsmoments versehen ist, wobei die Lenkkraftunterstützungseinrichtung einen elektrischen Servomotor umfasst,
- Fig. 2: ein Blockschaltbild zur Erzeugung eines Zielrücklaufiminkels, der der Lenkkraftunterstützungseinrichtung als Eingangsgröße zugeführt wird,
- Fig. 3: ein Blockschaltbild in einer weiteren Ausführung, bei der der Lenkkraftuftterstützungseinrichtung eine Zahnstangenkraft als Eingangsgröße zugeführt wird.

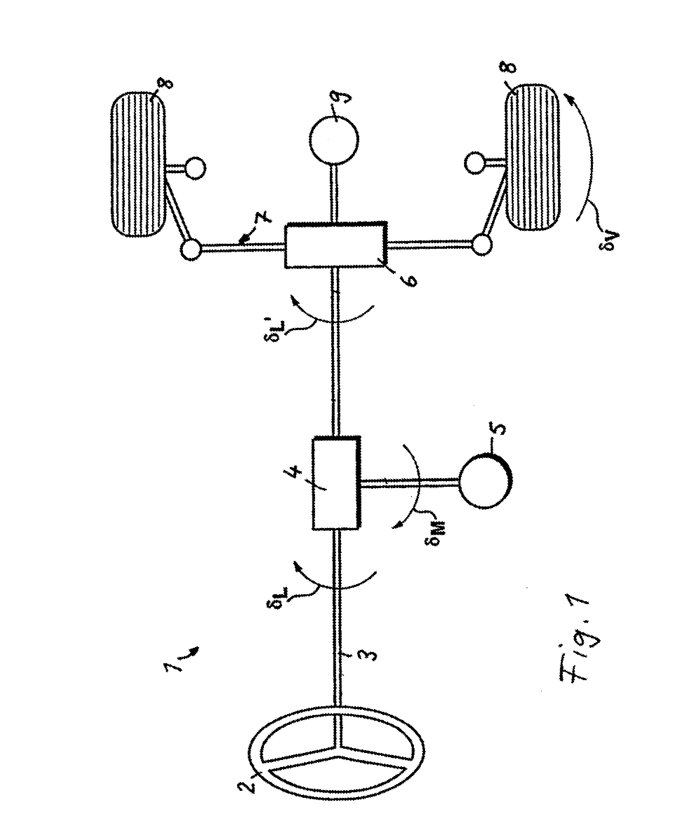

Fig. 1 zeigt ein aktives Lenksystem 1 für ein Kraftfahrzeug, das eine als Lenkrad 2 ausgeführte Lenkhandhabe, eine Lenkwelle 3, ein Lenkgetriebe 6 und ein

Lenkgestänge 7 und darüber hinaus ein Überlagerungsgetriebe 4 mit einem zugeordneten elektrischen Stellmotor 5 sowie eine Lenkkraftunterstützungseinrichtung 9 umfasst. Ein vom Fahrer über das Lenkrad 2 vorgegebener Lenkradwinkel δ*ᵢ* wird über das Lenkgetriebe 6 und das Lenkgestänge 7 in einen Radlenkwinkel δ*ᵥ* den lenkbaren Vorderrädern 8 des Fahrzeugs umgesetzt. In der Lenkwelle 3 befindet sich das Überlagerungsgetriebe 4, das über den Stellmotor 5 betätigt wird und über das fahrerunabhängig ein Überlagerungslenkwinkel δ*_{M}* erzeugbar ist. Der Überlagerungslenkwinkel δ*_{M}* wird dem vom Fahrer erzeugten Lenkradwinkel δ*ₜ*. überlagert, so dass der daraus resultierende Lenkwinkel δ*ᵣ*' über das Lenkgetriebe 6 und das Lenkgestänge 7 in einen entsprechend modifizierten Radlenkwinkel δ*ᵥ* umgesetzt wird.

Über die Lenkkraftunterstützungseinrichtung 9 wird in das Lenksystem 1 ein Unterstützungsmoment eingespeist. Die Lenkkraftunterstützungseinrichtung 9 umfasst einen elektrischen Stell- bzw. Servomotor zur Erzeugung des Unterstützungsmomentes sowie ein Regel- bzw. Steuergerät zur Ansteuerung des elektrischen Servomotors, Servomotor und Regel- bzw. Steuergerät können auch getrennt voneinander ausgeführt sein, wobei auch in diesem Fall die Signale des Regel- bzw. Steuergerätes zur Steuerung des Servomotors dienen,

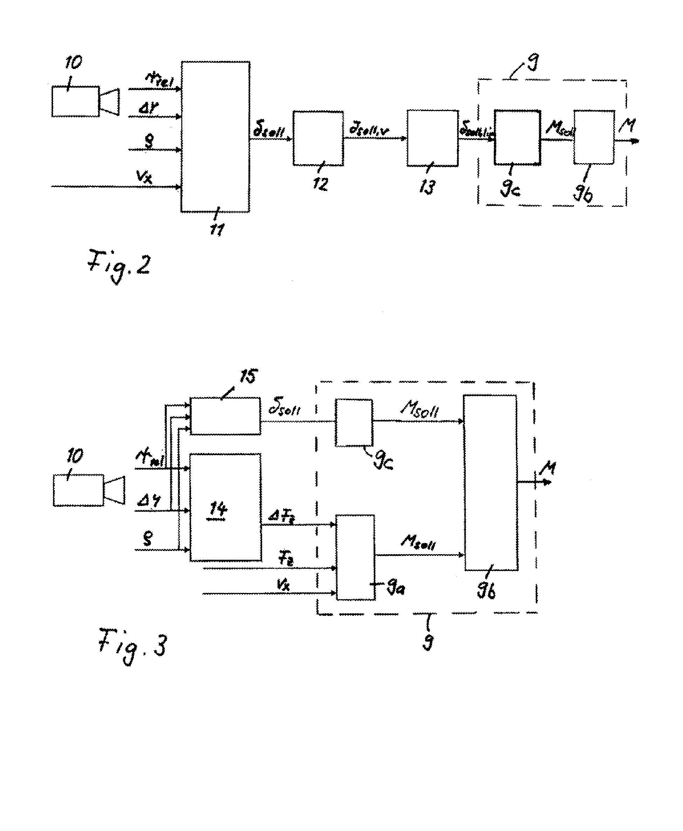

Wie dem Blockschaltbild gemäß Fig. 2 zu entnehmen, werden in einem Spurführungsassistenzsystem 10 des Fahrzeugs fahrzeugspezifische Größe sowie Umgebungsgrößen ermittelt, die für eine automatisierte Spurführung bzw. für die Unterstützung zur Spurführung relevant sind. Es handelt sich bei diesen Größen beispielhaft um den Gierwinkel ψ*_{rd}* des Fahrzeugs, die laterale Abweichung Δy zwischen der Sollbahn und der aktuellen Fahrzeugposition, die Krümmung ρ der Straße sowie die Fahrzeuglängsgeschwindigkeit vₓ, die aus einer fahrzeugeigenen Sensorik ermittelt wird. Diese Größen werden einem Funktionsblock 11 als Eingangsgrößen zugeführt, in welchem ein Regleralgorithmus hinterlegt bzw. abgespeichert ist, mit dem aus den Eingangsgrößen ein Radlenkwinkel δₛₒₗₗ berechnet wird. Aus dem Gierwinkel ψ*ᵣₑₗ* kann die Gierrate ψ*ᵣₑₜ* ermittelt werden, welche die relative Gierrate des Fahrzeugs bezogen auf eine Solltrajektorie bzw. -bahn bezeichnet. Auch die Gierrate ψ*ᵣₑₜ* wird ggf. im Funktionsblock 11 berücksichtigt.

Der Radlenkwinkel δₛₒₗₗ kann in einem nachfolgenden Funktionsblock 12 optional in einen Zielrücklaufwinkel δ_{soll,v} umgerechnet werden. In den Funktionsblöcken 11 und 12 kann auch eine variable Übersetzung zwischen Lenkrad und Rädern berücksichtigt werden, die durch das Überlagerungslenkgetriebe und den Überlagerungslenkwinkel zustande kommt, Gegebenenfalls kann aber auf die Umrechnung in den Soll-Radlenkwinkel δₛₒₗₗ verzichtet werden; in diesem Fall wird der Zielrücklaufwinkel δ_{soll.v} weiter verwendet.

Im nachfolgenden Funktionsblock 13 erfolgt eine Begrenzung des Zielrücklaufwinkels auf einen Lenkwinkel-Grenzwert δ_{soll,lim}. Anschließend wird der begrenzte Zielrücklaufwinkei als Eingangsgröße der elektrischen

Lenkkraftunterstützungseinrichtung 9 zugeführt, in der unter Berücksichtigung des zugeführten Zielrücklaufwinkels ein Unterstützungsmoment M generiert wird, welches in das Lenksystem eingespeist wird, Die Lenkkraftunterstützungseinrichtung 9 umfasst Subblöcke 9c und 9b, wobei der Subblock 9c einen aktiven Rücklauf umfasst, in welchem aus dem Zielrücklaufwinkel und ggf. weiteren Eingangsgrößen ein Soll moment Mₛₒₗₗ berechnet wird, das als Eingangsgröße dem Subblock 9b zugeführt wird, in welchem das Unterstützungsmoment M berechnet wird. Innerhalb der Lenkkraftunterstutzungseinnchtung 9 können parallel zu dem aktiven Rücklauf weitere Berechnungsmodule bzw. Subblöcke enthalten sein, die gemäß weiteren Berechnungsvorschriften aus den Eingangsgrößen weitere Sollmomentanteile berechnen, welche gemeinsam mit dem Sollmomentanteil aus dem aktiven Rücklauf 9c in dem Subblock 9b zusammengeführt werden, Im Subblock 9b kann ein unterlagerter Regler enthalten sein, aus dem das Unterstützungsmoment M berechnet wird.

Auch im Ausführungsbeispiel gemäß Fig. 3 werden in einem Spurführungsassistenzsystem fahrzeuginterne sowie Umgebungsgrößen ermittelt, nämlich der relative Gierwinkel ψᵣₑᵢ, die laterale Abweichung Δy zwischen der Fahrzeugposition und einer Solltrajektorie sowie die Straßenkrümmung. p. Diese Größen werden als Eingangsgrößen zum einen einem Funktionsblock 14 zugeführt, in welchem gemäß einem hinterlegten Regleralgorithmus ein Zahnstangenkraft-Offset ΔF_{z} ermittelt wird. Zum ändern werden die aus dem Spurführungsassistenzsystem 10 ermittelten Größen einem weiteren Funktionsblock 15 als Eingangsgrößen zugeführt, in welchem gemäß einem weiteren Regleralgorithmus ein Zielrücklaufwinkel δₛₒₗₗ berechnet wird.

Der Zahnstangenkraft-Offset ΔF_{z} hat die Funktion einer Sollgröße, die als Eingangsgröße einem Basisunterstützungsmodul 9a zugeführt wird, welches Bestandteil der elektrischen Lenkkraftunterstützungseinlichtung 9 ist, wobei in dem Basisunterstützurigsmodul 9a auf der Basis einer oder mehrerer Kennlinien ein Momentenanteil abhängig von einer gemessenen oder berechneten Zahnstangenkraft berechnet wird. Als weitere Eingangsgrößen werden dem Modul 9 die tatsächlich wirkende Zahnstangenkraft F_{z}, weiche entweder berechnet oder sensorisch ermittelt wird, sowie die Fahrzeuglängsgeschwindigkeit Vₓ zugeführt. Ausgangsseitig liegt an dem Modul 9a ein Sollmoment Mₛₒₗₗ an, das innerhalb der Lenkkraftunterstützungseinnchtung 9 einem weiteren Modul 9b der Lenkkraftunterstützungseinrichtung 9 als Eingangsgröße zugeführt wird, wobei dieses Modul 9b zusätzlich als Eingangsgröße den Zielrücklaufwsnkel δₛₒₗₗ aus dem Funktionsblock 15 zugeführt bekommt. Analog zum Ausführunsgbeispiel nach Fig, 2 umfasst die Lenkkraftunterstützungseinrichtung 9 einen Subblock 9c mit einem aktiven Rücklauf, in welchem aus dem Zielrücklaufwinkel und ggf, weiteren Eingangsgrößen ein Sollmomentenanteil Mₛₒₗₗ berechnet wird, der ebenfalls als Eingangsgröße dem Modul 9b zugeführt wird,

In dem Modul 9b wird aus den Sollmomentenanteilen Mₛₒₗₗ und ggf, weiteren Eingangsgrößen in einem unterlagerten Regler ein Unterstützungsmoment M berechnet, welches in das Lenksystem eingespeist wird,

### Bezugszeichenliste

- 1: Lenksystem
- 2: Lenkrad
- 3: Lenkwelle
- 4: Überlagerungsgetriebe
- 5: Stellmotor
- 6: Lenkgetriebe
- 7: Lenkgestänge
- 8: Vorderrad
- 9: Lenkkrafitunterstützungseinrichtung
- 10: Spurführungsassistenzsystem
- 11: Funktionsblock
- 12: Funktionsblock
- 13: Funktionsblock
- 14: Funktionsblock
- 15: Funktionsblock Unterstützungsmoment (M)

Sollmoment (Mₛₒₗₗ)
Lenkradwinkel (δ*_{L}*)
Radlenkwinkel (δ*v*)
Zielrücklaufwinkel (δₛₒₗₗ)
Soll-Radlenkwinkel (δ_{soll,v})
Soll-Zahnstangenkraft(F_{z,soll})
Zahnstangenkraft-Offset(ΔF_{z})
Ist-Gierrate(ψ*ᵣₑₜ*)
Relativer Gierwinkel (ψ*ᵣₑₗ*)
laterale Abweichung (Δy)
Kurvenkrümmung (ρ)
Fahrzeuggeschwindigkeit (vₓ)
Lenkwinkel-Grenzwert(δ_{soll,lim})
Überlagerungslenkwinkel (δ*_{M}*)

## Patentansprüche

1. Verfahren zum Betrieb eines Lenksystem in einem Fahrzeug, wobei das Lenksystem (1) Lenkeinrichtungen (2, 3, 6, 7) zur Übertragung eines vom Fahrer vorgegebenen Lenkradwinkels (δ*_{L}*) in einen Radlenkwinkel (δ*ᵥ*) an den lenkbaren Rädern (8) des Fahrzeugs sowie eine Lenkkraftunterstützungseinrichtung (9) mit einem elektrischen Servomotor aufweist, über den ein elektrisches Unterstützungsmoment (M) erzeugbar ist,
**dadurch gekennzeichnet,**
**dass** der Lenkkraftunterstützungseinrichtutig (9) als Eingangsgröße, die der Ermittlung des vom elektrischen Servomotor zu erzeugenden elektrischen Unterstützungsmoments (M) zugrunde gelegt wird, ein Zahnstangenkraft-Offset (ΔF_{z}) bzw. ein mit dem Zahnstangenkraft-Offset (ΔF_{z}) korrelierender Wert zugeführt wird, der aus der Abweichung zwischen Soll- und lst-Position des Fahrzeugs bestimmt wird.

2. Verfahren zum Betrieb eines Lenksystem in einem Fahrzeug, insbesondere nach Anspruch 1, wobei das Lenksystem (1) Lenkeinrichtutigen (2, 3, 6, 7) zur Übertragung eines vom Fahrer vorgegebenen Lenkradwinkels (δₜ) in einen Radlenkwinkel (δ*ᵥ*) an den lenkbaren Rädern (8) des Fahrzeugs sowie eine
Lenkkraftunterstützungseinrichtung (9) mit einem elektrischen Servomotor aufweist, über den ein elektrisches Unterstützungsmoment (M) erzeugbar ist,
**dadurch gekennzeichnet,**
**dass** der Lenkkraftunterstützungseinrichtung (9) als Eingangsgröße, die der Ermittlung des vom elektrischen Servomotor zu erzeugenden elektrischen Unterstützungsmoments (M) zugrunde gelegt wird, ein Zielrücklaufwinkel (δₛₒₗₗ)bzw, ein mit dem Zielrücklaufwinkel (δₛₒₗₗ) korrelierender Wert zugeführt wird, der aus der Abweichung zwischen Soll- und Ist-Position des Fahrzeugs bestimmt wird.

3. Verfahren nach Anspruch 1 oder 2,
**dadurch gekennzeichnet,**
**dass** die Sollgröße (δₛₒₗₗ, ΔF_{z}) als Funktion weiterer Zustandsgrößen des Fahrzeugs ermittelt wird,

4. Verfahren nach Anspruch 3,
**dadurch gekennzeichnet,**
**dass** die Sollgröße (δₛₒₗₗ, ΔF_{z}) als Funktion des relativen Gierwinkels (ψ*ᵣₑₜ*) ermittelt wird.

5. Verfahren nach Anspruch 3 oder 4,
**dadurch gekennzeichnet,**
**dass** die Sollgröße (δₛₒₗₗ, ΔF_{z}) als Funktion der lateralen Abweichung (Δy) zwischen einer Solltrajektorie und der tatsächlichen Fahrzeugposition ermittelt wird,

6. Verfahren nach einem der Ansprüche 3 bis 5,
**dadurch gekennzeichnet,**
**dass** die Sollgröße (δₛₒₗₗ, ΔF_{z}) als Funktion der Kurvenkrümmung (ρ) ermittelt wird.

7. Verfahren nach einem der Ansprüche 3 bis 6,
**dadurch gekennzeichnet,**
**dass** die Sollgröße (δₛₒₗₗ, ΔF_{z}) als Funktion der Fahrzeuggeschwindigkeit (vₓ) ermittelt wird.

8. Verfahren nach einem der Ansprüche 1 bis 7,
**dadurch gekennzeichnet,**
**dass** die Sollgröße (δₛₒₗₗ) auf einen Grenzwert (δ_{soll,lim}) beschränkt wird.

9. Lenksystem zur Durchführung des Verfahrens nach einem der Ansprüche 1 bis 8.

10. Fahrzeug mit einem Lenksystem nach Anspruch 9 und mit einem Fahrerassistenzsystem,

11. Fahrzeug nach Anspruch 10,
**dadurch gekennzeichnet,**
**dass** das Fahrerassistenzsystem ein Spurführungsassistenzsystem ist.
